## Europäisches Patentamt
## European Patent Office
## Office européen des brevets

(19)

(11) Veröffentlichungsnummer: **0 239 674**
**B1**

(12) **EUROPÄISCHE PATENTSCHRIFT**

(45) Veröffentlichungstag der Patentschrift:
07.03.90

(51) Int. Cl.⁴: **H01M 6/04, H01M 4/42**

(21) Anmeldenummer: **86116969.6**

(22) Anmeldetag: **06.12.86**

(54) **Galvanisches Primärelement.**

(30) Priorität: **22.02.86 DE 3605718**

(43) Veröffentlichungstag der Anmeldung:
**07.10.87 Patentblatt 87/41**

(45) Bekanntmachung des Hinweises auf die Patenterteilung:
**07.03.90 Patentblatt 90/10**

(84) Benannte Vertragsstaaten:
**BE CH DE FR GB GR IT LI**

(56) Entgegenhaltungen:
**DE-B- 2 320 555**
**DE-B- 2 837 468**

**C. Drucker, A. Finkelstein: "Galvanische Elemente und Akkumulatoren", 1932, Akademische Verlagsgesellschaft, Leipzig, Seiten 94, 95**
**Karl F. Kordesch (Herausgeber):"Batteries; Manganese Dioxid", Band 1, 1974, Marcell Dekker, Inc., New York, Seiten 55-57**

(73) Patentinhaber: **VARTA Batterie Aktiengesellschaft, Am Leineufer 51, D-3000 Hannover 21(DE)**

(72) Erfinder: **Jung, Gerd, Enzstrasse 1,
D-7090 Ellwangen(DE)**
Erfinder: **Rüggeberg, Klaus, Einsteinstrasse 21,
D-7090 Ellwangen(DE)**

(74) Vertreter: **Kaiser, Dieter Ralf, Dipl.-Ing.,
Gundelhardtstrasse 72, D-6233 Kelkheim/Ts.(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein galvanisches Primärelement mit einer flachen, hohlzylindrischen oder becherförmigen Zinkanode, einem Kathodendepolarisator und einem aus Gel-Elektrolyt oder Gel-/Elektrolyt-beschichtetem Trägermaterial gebildeten Separator.

Diesem Gattungsbegriff lassen sich allgemein Primärelemente zuordnen, bei denen ungeachtet sonstiger Varianten hinsichtlich der Zellenkonstruktion ein Zinkbehälter gleichzeitig das Zellengehäuse und die negative Elektrode bildet. Die Herstellung dieser Zinkanode erfolgte früher überwiegend durch Tiefziehen von Zinkband, heute bevorzugt durch Fließpressen von gestanzten oder gegossenen Kalotten.

Nach der Formgebung liegt somit eine Anode vor, deren Wanddicke sowohl die mechanische Stabilität als auch den Kapazitätsüberschuß bestimmt. Gegen die als Preßling eingebrachte oder auch direkt eingepreßte Kathode ist die Zinkanode mittels einer Behälterauskleidung aus Gel-Elektrolyt-beschichtetem Trägermaterial oder nur mit Gel-Elektrolyt separiert. Als eigentliches Leitsalz dient vorzugsweise Zinkchlorid, dem ggf. etwas Ammoniumchlorid beigefügt sein kann. Es ist aber auch entsprechend der klassischen Leclanché-Zelle Salmiaklösung als Elektrolyt verwendbar. Von dieser wird stets etwas Anodenzink aufgelöst, so daß dieser Elektrolyt zwangsläufig auch etwas Zinkchlorid enthält.

Trockenelemente dieser Art neigen während der Lagerung zur Selbstentladung, die nur zum Teil durch konstruktive Maßnahmen unterdrückt werden kann. Vielmehr beeinflußt die Qualität der verwendeten Materialien wie auch die Oberflächenbeschaffenheit des Zinkbechers das Lagerverhalten der Batterie. Diese Eigenschaften wirken sich auf alle Vorgänge in der Reaktionszone, die durch die Lösungsneigung des Zinks bedingt sind, aus. Sie resultieren aus der niedrigen Abscheidungsüberspannung des Zinks in saurer Lösung.

Dabei kann eine Inhibierung der Zinkkorrosion sowohl am Zink selbst durch Legierungszusätze als auch durch Zufügen inhibierend wirkender Substanzen erzielt werden.

Das an sich übliche, zum Schutz des Zinks angewandte Verfahren der Amalgamierung ist bei sauren Elektrolytlösungen, selbst bei Verwendung von sehr reinem Zink, welches dem Säureangriff eher als unreines Zink widersteht, oft nicht ausreichend, da die Schutzwirkung des Quecksilbers auf die Dauer eine Lochfraßkorrosion nicht verhindert. In der DE-PS 1 086 309 wurde daher bereits die Zulegierung von Indiummetall zu dem der Lösungselektrode zugrundeliegenden Feinzink oder der Zusatz eines Indiumsalzes zum Elektrolyten vorgeschlagen. Die DE-PS 2 320 555 offenbart die Verwendung von Polyäthylenglycolmonolauryläther als einen organischen Korrosionsinhibitor, der sich durch gute Elektrolytlöslichkeit auszeichnet.

Für die Elektrodenbecher kommt sogenanntes Feinzink mit einem Zinkgehalt von 99,95 bis 99,995 zur Verarbeitung, dem in aller Regel Blei und Cadmium zulegiert ist. Von diesen fördert Blei die mechanische Verarbeitbarkeit, insbesondere die Walzbarkeit des Zinks, und erhöht seine Korrosionsfestigkeit. Durch Cadmium, das mit Zink eine feste Lösung bildet, wird dessen Härte verbessert.

R. Huber ("Trockenbatterien", VARTA Fachbuchreihe Band 2, 2. Aufl. 1968, Seite 24, VDI-Verlag Düsseldorf) gibt die Zusammensetzung geeigneter Zinklegierungen mit 0,06 - 0,1% Pb und 0,05 - 0,07% Cd für gezogene Becher, mit 0,1 - 1% Pb und 0 - 0,06% Cd für gespritzte Becher an. Aus N.C. Cahoon und G.W. Heise (The Primary Battery, Vol. 2 1976, John Wiley and Sons, New York, Seite 57) kann man entnehmen, daß für das Fließpressen von Zinkbechern eine Legierung mit ca. 0,1% Pb und 0,05% Cd am besten geeignet ist, daß diese Legierung ein relativ feinkörniges Gefüge besitzt und im übrigen der für das Tiefziehen von Bechern verwendeten Legierungszusammensetzung nahekommt. G.W. Vinal (Primary Batteries, John Wiley and Sons, New York, Seite 77) nennt sogar je 0,3% Pb und Cd als übliche Zusätze zum Zink, welches für Trockenelementebecher eingesetzt wird. Eine Einschränkung soll nur bei gezogenen Bechern insoweit gelten, als der Cd-Gehalt dort auf 0,1% und darunter herabgesetzt ist, da höhere Cd-Gehalte das Tiefziehen erschweren.

Angesichts dieses Standes der Becherfertigung, vorzugsweise im Fließpreßverfahren als Massenartikel, und auf der Basis einer weitgehend festgeschriebenen Zusammensetzung des Zinkmaterials liegt der Erfindung die Aufgabe zugrunde, ein Primärelement verfügbar zu machen, welches umweltfreundlich ist und mit dieser Eigenschaft ohne Einschränkung nach den konventionellen Verfahren der Batterietechnik realisiert werden kann.

Die Aufgabe wird erfindungsgemäß mit den im kennzeichnenden Teil des Anspruchs 1 angegebenen Maßnahmen gelöst.

Danach hat sich gezeigt, daß ein Legierungsmaterial aus den alleinigen Komponenten Zink und Blei allen Anforderungen an den Anodenbecher in zumindest dem gleichen Umfange gerecht wird, wie die sonst verwendete Zink/Blei/Cadmium-Legierung, wenn in Verbindung mit der Zn-Pb-Legierung ohne zulegiertes Cadmium ein Polyäthylenglycolmonolauryläther enthaltender Elektrolyt eingesetzt wird. Insbesondere wurde gefunden, daß die Becherkorrosion mit den erfindungsgemäßen Maßnahmen erheblich reduziert werden kann. So ergab ein in 3n HCl bei 20°C durchgeführt Korrosionstest von 40 min. Dauer einen Gewichtsverlust von 418 mg für reines Zink und von 180 mg für eine Legierung Zn - 0,25 Pb - 0,06 Cd, dagegen von nur 55 mg für Zn - 0,25 Pb und 63 mg für Zn - 0,45 Pb. Die Zahlenangaben Zn, Pb und Cd sind Prozente; in allen Fällen waren dir Zinkbecher durch den erfindungsgemäßen Glycoläther inhibiert.

Für die cadmiumfreie Becherlegierung hat sich erfindungsgemäß ein Gehalt von 0,1 bis 0,6% Pb im restlichen Feinzink, dessen Reinheit mindestens 99,95 betragen soll, als günstig erwiesen. Vorzugsweise liegt der Pb-Gehalt bei 0,1 bis 0,3%.

Die erfindungsgemäße Legierungszusammensetzung unterscheidet sich damit von den bisher verwendeten Becherlegierungen im wesentlichen dadurch, daß die umweltschädliche Cd-Komponente ersatzlos entfallen ist. Dabei konnte im Korrosionstest nachgewiesen werden, daß sich erfindungsgemäße Anoden auch ohne die zusätzliche Inhibierung im Vergleich zu ebenfalls nicht inhibierten aus Feinzink bzw. aus einer Zn- 0,25 Pb - 0,06 Cd-Legierung bestehenden Anoden ähnlich resistent verhalten.

Die auch hier mit zunehmendem Bleigehalt steigende Inhibierung läßt sich mit der Verfeinerung des Zinkkorngefüges und Anhebung der Überspannung erklären. Sehr hohe Bleianteile (> 0,6%) sind aber wegen der dann verstärkt auftretenden "pitting corrosion" nicht ratsam.

Der organische Inhibitor Polyäthylenglycolmonolauryläther ist erfindungsgemäß in einer Menge von 0,001 bis 2 Gew.%, vorzugsweise 0,01 bis 0,2 Gew.%, bezogen auf das Batteriegewicht, vorhanden. Er wird am besten in den Elektrolyten vor dessen Gelifizierung eingebracht und kann, falls nötig, vorher mit wenig Alkohol in Lösung gebracht werden.

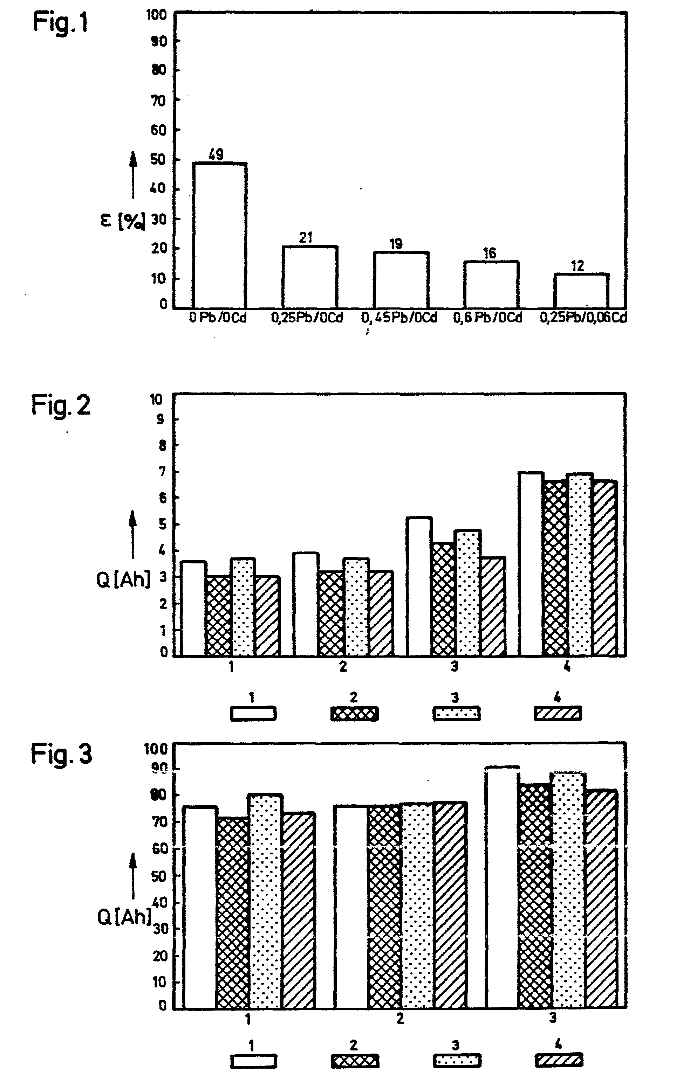

Eine weitere, vom Batterieherstellungsprozeß diktierte Forderung, wird von der erfindungsgemäßen Legierung einwandfrei erfüllt: Die Zinkbecher sind während der Fertigung und der Zellenmontage mechanischen Belastungen ausgesetzt, die ein Mindestmaß an Formstabilität verlangen. Um den notwendigen Widerstand gegen Deformationen zu erreichen, hatte man bisher durch Zulegieren von Blei und Cadmium als Feinkornbildner zum Feinzink eine beträchtliche Verbesserung der Bechersteifigkeit erzielt. Unlegiertes Feinzink ist demgegenüber wegen des groben Korngefüges sehr leicht verformbar. Erfindungsgemäße Anodenabschnitte zeigten sich beim vergleichenden Verformungstest den Belastungen ebenso gewachsen wie Anodenabschnitte aus konventioneller, Cd-haltiger Legierung (vgl. hierzu Fig. 1 und weiter unten).

Das Primärelement gemäß der Erfindung steht schließlich auch im Kapazitätsverhalten anderen vergleichbaren Trockenelementen mit konventionellen Anodenbechern und ohne Inhibierung nicht nach. Dies ergab ein Test, der an Trockenelementen vom Leclanché-Typ auf der Grundlage des Systems $Zn/ZnCl_2/MnO_2$ mit der Zellengröße IEC R 20 sowie an Luftsauerstoffelementen der Größe IEC AR 40 durchgeführt wurde. Als Braunsteintypen können alternativ Natur-, Elektrolyt- oder chemische Braunsteine allein oder in Kombination verwendet werden.

Im einzelnen bestand bei den erstgenannten Zellen die Anode aus einem Zinkbecher mit der Legierungszusammensetzung Zn - 0,25 Pb, die Kathode aus Braunstein, leitfähigem Ruß, Zinkoxid, Zinkchlorid und Wasser, der Separator aus Gel-Elektrolytbeschichtetem Spezialpapier, das zugleich den erfindungsgemäßen Inhibitor enthielt. Bei den Luftsauerstoffelementen war die Anode ein Zinkmaterial aus Zn - 0,25 Pb, die Kathode ein Gemisch aus Aktivkohle, leitfähigem Ruß, Ammoniumchlorid und Wasser, und der Separator wiederum unter Verwendung des inhibitorhaltigen Gel-Elektrolyt hergestellt.

Die Befunde zur mechanischen Festigkeit der Anodenbecher und zum Kapazitätsverhalten der erfindungsgemäßen Primärelemente werden durch die nachstehenden Abbildungen verdeutlicht.

Figur 1 zeigt Verformungsgrade von Zinkbechern in Abhängigkeit von Legierungszusätzen.

Figur 2 zeigt Kapazitäten erfindungsgemäßer Primärelemente vom Leclanché-Typ im Vergleich zu konventionellen Primärelementen unter verschiedenen Bedingungen der Lagerung und Stromentnahme.

Figur 3 zeigt einen Kapazitätsvergleich ähnlich wie Figur 2 für Luftsauerstoffelemente.

In der Graphik nach Figur 1 ist als Ordinate der Verformungsgrad $\varepsilon$ in % aufgetragen, den der Anodenabschnitt in Abhängigkeit von der angegebenen Zusammensetzung bei einer Belastung mit 5 kg in Axialrichtung erleidet. Gegenüber einem konventionellen Becher aus Cd-haltiger Legierung erweisen sich erfindungsgemäße Becher als vergleichbar. Ein bei $\varepsilon$= 12% liegendes Verformungsminimum, welches mittels 0,06% zulegiertem Cd erzielbar wäre, rechtfertigt in diesem Fall nicht die Anwesenheit des unerwünschten Metalls, weil die Cd-freie Becherlegierung bereits den an sie gestellten Festigkeitsanprüchen genügt.

Aus den Balkendiagrammen der Figuren 2 und 3 geht allgemein hervor, daß mit den erfindungsgemäßen umweltfreundlichen Maßnahmen zumindest keine nennenswerten Kapazitätseinbußen des Primärelements in Kauf genommen werden müssen.

Die jeweils auf die Ordinate aufgetragene Kapazität Q (Ah) bezieht sich auf verschiedene Entladebedingungen, nämlich in Figur 2 auf

1) Konstantstromentladung über 5 Ohm
2) Intermittierende Entladung von 2 Std. pro Tag über 5 Ohm
3) Entladung nach LIFT (Light Industrial Flashlight-Test) über 2,2 Ohm
4) Intermittierende Entladung von 4 h pro Tag über 20 Ohm
   und in Figur 3 auf
1) Konstantstromentladung über 5 Ohm
2) Konstantstromentladung über 10 Ohm
3) Konstantstromentladung über 25 Ohm

In den Figuren 2 und 3 bedeuten

1: Konventionelles Element, ungelagert
2: Konventionelles Element, 3 Monate bei 45°C gelagert
3: Erfindungsgemäßes Element, ungelagert
4: Erfindungsgemäßes Element, 3 Monate bei 45°C gelagert

Der Kern der Erfindung läßt sich dahin zusammenfassen, daß es möglich ist, Primärelemente in gewohnter Qualität hinsichtlich Lagerverhalten und elektrischer Leistung herzustellen, ohne daß dem für die Herstellung der Anodenbecher bestimmten Feinzink in bislang üblicher Weise Cadmium zulegiert wird. Eine gegebenenfalls spurenweise Anwesenheit von Cadmium in der Becherlegierung liegt im Rahmen der für Feinzink nach DIN 1706 zugelassenen Fremdbeimengungen unter 10 mg/kg Batterie.

Ein solches cadmiumfreies und durch den Einsatz eines organischen Inhibitors auch Hg-freies Primärelement, kommt den Bestrebungen des Umweltschultzes in hohem Maße entgegen.

**Patentansprüche**

1. Galvanisches Primärelement mit einer flachen, holzylindrischen oder becherförmigen Zinkanode, einem Kathodendepolarisator und einem aus Gel-Elektrolyt oder Gel-/Elektrolyt-beschichtetem Trägermaterial gebildeten Separator, dadurch gekennzeichnet, daß das Zink aus einer Legierung aus 0,1 bis 0,6% Blei und Rest Feinzink mit einer Reinheit von mindestens 99,95% besteht, und daß dem Separator oder der Masse Polyäthylenglycolmonolauryläther als Inhibitor zugesetzt ist.

2. Primärelement nach Anspruch 1, dadurch gekennzeichnet, daß dem Feinzink 0,1 bis 0,3% Blei zulegiert ist.

3. Primärelement nach den Ansprüchen 1 und 2, dadurch gekennzeichnet, daß die Menge des Inhibitors 0,001 bis 2 Gewichtsprozent, vorzugsweise 0,01 bis 0,2 Gewichtsprozent vom Gesamtgewicht des Primärelements beträgt.

**Claims**

1. Galvanic primary cell having a flat, hollow-cylindrical or cup-shaped zinc anode, a cathode depolarizer and a separator formed from gel electrolyte or gel/electrolyte-coated support material, characterized in that the zinc comprises an alloy of 0.1 to 0.6% lead and the remainder is fine zinc having a purity of at least 99.95%, and in that polyethyleneglycol monolauryl ether is added as an inhibitor to the separator or mass.

2. Primary cell according to claim 1, characterized in that 0.1 to 0.3% lead is alloyed with the fine zinc.

3. Primary cell according to claims 1 and 2, characterized in that the amount of the inhibitor is 0.001 to 2% by weight, preferably 0.01 to 0.2% by weight, of the total weight of the primary cell.

**Revendications**

1. Elément galvanique primaire avec une anode de zinc plate, cylindrique creuse ou en forme de godet, un dépolarisateur de cathode, et un séparateur constitué par un gel d'électrolyte ou un matériau porteur revêtu d'un gel d'électrolyte, élément caractérisé en ce que le zinc est constitué par un alliage à une teneur de 0,1 à 0,6% de plomb, le reste étant du zinc affiné à une pureté d'au moins 99,95% et de l'éther monlaurique de polyéthylène glycol étant ajouté au séparateur ou à la masse en tant qu'inhibiteur.

2. Elément primaire selon la revendication 1, caractérisée en ce que 0,1 à 0,3% de plomb est ajouté par alliage au zinc affiné.

3. Elément primaire selon les revendications 1 et 2, caractérisé en ce que la quantité d'inhibiteur est de 0,001 à 2 pour cent en poids, de préférence de 0,01 à 0,2 pour cent en poids du poids total de l'élément primaire.

EP 0 239 674 B1

**Fig.1**

**Fig.2**

**Fig.3**